# EUROPEAN PATENT SPECIFICATION

(11) **EP 2 259 100 B1**
(45) Date of publication and mention of the grant of the patent: **17.06.2015**
(21) Application number: 09724096.4
(22) Date of filing: 25.03.2009
(51) Int. Cl.: G02B 5/18, B05C 11/02, G02B 1/02, B82Y 20/00, B82Y 40/00, G02B 6/13

(54) **DEVICE FOR FORMING ARTIFICIAL OPAL MEMBRANE AND METHOD FOR FORMING ARTIFICIAL OPAL MEMBRANE**
VORRICHTUNG ZUR HERSTELLUNG EINER KÜNSTLICHEN MATTEN MEMBRAN UND VERFAHREN ZUR HERSTELLUNG EINER KÜNSTLICHEN MATTEN MEMBRAN
DISPOSITIF POUR FORMER UNE MEMBRANE D'OPALE ARTIFICIELLE ET PROCÉDÉ DE FORMATION D'UNE MEMBRANE D'OPALE ARTIFICIELLE

(30) Priority: 25.03.2008 JP 2008076953
(43) Date of publication of application: 08.12.2010
(73) Proprietor: National Institute for Materials Science, Tsukuba-shi, Ibaraki 305-0047 (JP)
(72) Inventor: FUDOJI, Hiroshi, Tsukuba-shi Ibaraki 305-0047 (JP); SAWADA, Tsutomu, Tsukuba-shi Ibaraki 305-0047 (JP); KITAMURA, Kenji, Tsukuba-shi Ibaraki 305-0047 (JP)
(74) Representative: Vossius & Partner Patentanwälte Rechtsanwälte mbB
(86) International application number: PCT/JP2009/055977
(87) International publication number: WO 2009/119677

(56) References cited:
- JP-A- 2007 008 535
- JP-A- 2007 033 593
- JP-A- 2007 044 598
- US-A1- 2002 062 782
- US-A1- 2003 008 771
- US-A1- 2007 127 164
- US-A1- 2008 123 179

## Description

The present invention relates to an apparatus and process for the fabrication of artificial opal films wherein a substrate coated with a suspension film having fine particles dispersed in it is located in a stage, and the dispersion medium of said suspension is evaporated off for crystallization of said fine particles to fabricate an artificial opal film,

High-quality artificial opal (close-packed colloidal crystal) thin films are used as a material for high-performance materials and devices of photonic crystals and photonic structural color.

Three fabrication processes are primarily known for the fabrication of the artificial opal thin films.

The first relies upon a coating technique wherein a substrate is immersed in a suspension with the starting material: monodisperse fine particles dispersed in a solution to deposit them on the substrate by the convective assembly phenomenon (Non-Patent Publication 1) as depicted in Fig. 1. More specifically, a substrate (1) is located vertically in a suspension (6), and surface tension causes a dispersion medium (4) to wet, and spread on, the surface of the substrate upwardly from a liquid level. Generally for the dispersion medium, pure water, ethanol or the like is used because fine particles (3) can be well dispersed in it. As the dispersion medium (4) is evaporated off, it lets the fine particles deposit on the substrate, forming artificial opal (3). That evaporation of the dispersion medium (4) works as drive force, causing the dispersion medium (4) to migrate through a capillary (5) upwardly along the substrate. The fine particles (3) are carried along with this flow of the dispersion medium (4) to a site where artificial opal is to be formed. If the conditions for such convective assembly are optimized, it is then possible to coat on the substrate the artificial opal (2) having the fine particles (3) ordered in it.

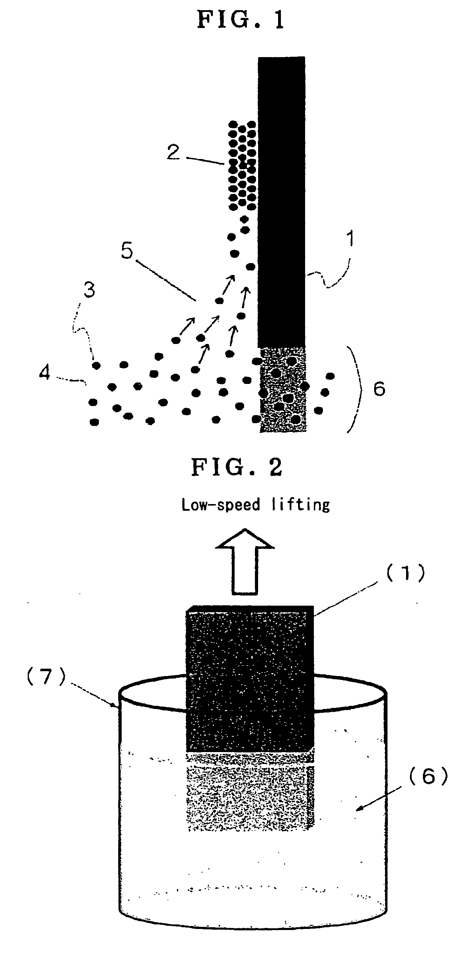

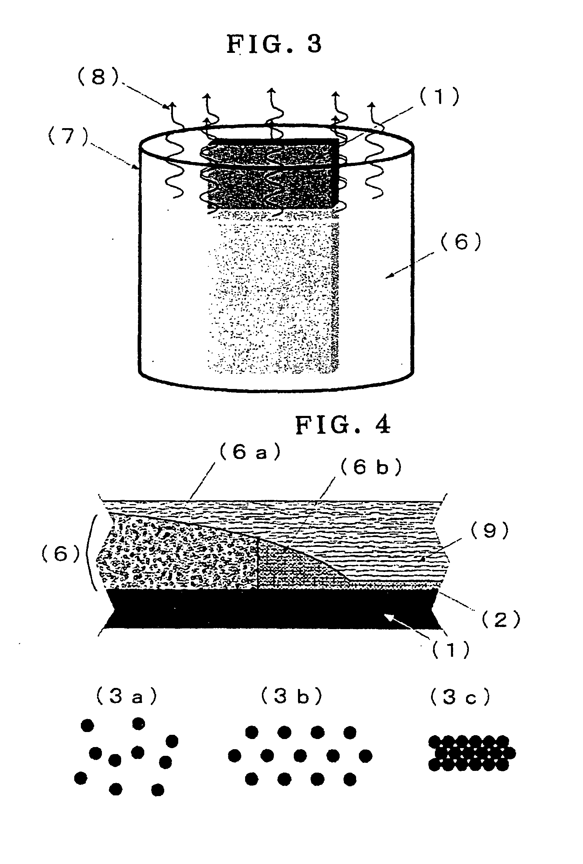

About this technique there have been two methods reported. One is the dipping method (Fig. 2; Non-Patent Publication 2) wherein fine particles are lifted up at a constant speed, as conceptually described below. A suspension (6) is poured into a beaker (7), and a substrate (1) is immersed in it. The substrate (1) is lifted up from the suspension (6) at a constant speed. A vibration-free, special lifter is used for lifting up the substrate. Another is the vertical deposition method (Fig. 3; Non-Patent Publication 3) wherein a solvent is evaporated off while the substrate is immersed in the suspension. As in Fig. 2, a substrate (1) is immersed in a suspension (6), after which a dispersion medium is evaporated off at (8) in a constant temperature bath having a controlled temperature. This method does not require any lifter or the like to lift up the substrate. In either case, the artificial opal thin film may be formed by way of the convective assembly phenomenon. Although both methods are relatively simple and convenient, far more must still be done to permit homogeneous, uniform artificial opal thin films to have a large area because of combinations of various phenomena caused by self-organization and dissipative structure such as occurrence of a striped deposition pattern of fine particles and uneven thicknesses of artificial opal thin films.

The second fabrication process is a packing cell one (Non-Patent Publication 4) wherein a capillary space is created in a gap between two glass substrates through a spacer, and a suspension is poured in that gap for crystallization by evaporation of a solvent. With that packing cell process, artificial opal thin films having a constant film thickness may be fabricated because the film thickness can be controlled by the spacer; for the formation of a film having a large area, however, there is still a problem to be solved, because the larger the area of the glass cell, the more sharply the crystallization speed goes down.

To surmount this shortcoming, there has also been an oil coating process reported (i.e. the third fabrication process), wherein one glass substrate (1) is coated with silicon oil (9) that is a nonpolar solvent (Non-Patent Publication 5).

With that oil coating process, water is evaporated out of a suspension (6) while passing through the oil coating layer in a batch fashion, resulting in an artificial opal thin film (2) being formed on the substrate. About the oil coating process it has been reported that the artificial opal thin film (2) is formed through the process shown in Fig. 4. Fig. 4 is illustrative in section of how the artificial opal (2) is formed out of the suspension (6) onto the substrate (1). The suspension (6) embraces an uncrystallization state (6a) where fine particles (3) are out of order (3a), a semi-crystallization state (6b) where the fine particles are ordered in the suspension (3b), and a crystallization state (2) where the fine particles (3) are ordered in proximity (3c). This crystallization phenomenon keeps on going in the coating oil (9). The dispersion medium of the suspension (6) is evaporated off through the layer of the coating oil (9) so that the deposition of the fine particles (3) by convective assembly is held down. Conversely, the artificial opal (2) occurs through two stages: one in which colloidal crystals are formed by ordering of the fine particles (3) that are subjected to the Brownian movement in the suspension (6) by a lowering of the Gibbs free energy of the whole system due to a rise of the density of the fine particles in the suspension caused by evaporation and the entropy effect, and the other in which there is closest packing involved due to a further rise of the fine particle density. This is a phenomenon different from the convective assembly phenomenon explained with reference to Fig. 1.

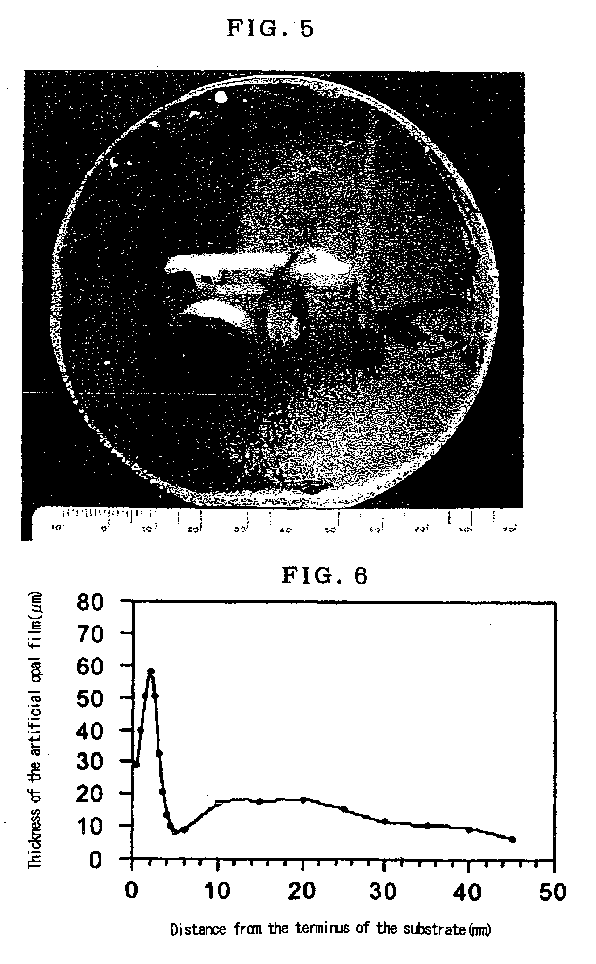

Non-Patent Publication 6 offers a report on a study of forming an artificial opal thin film on a silicon wafer substrate by the batch process, as shown in Fig. 5, revealing that the whole substrate has the same structural color. It is thus possible to form a high-quality artificial opal thin film by the oil coating film-formation process different from the convective assembly process. The homogeneity of the structural color has been known as one feature of artificial opal quality. This homogeneity may be estimated by analysis of the Bragg diffraction wavelength of reflection spectra. Fig. 5 shows a homogeneous wavelength that is not dependent on site. Fig. 6 is illustrative of a sectional profile of the thickness of the artificial opal shown in Fig. 5. As can be seen from the graph, there is a locally thicker portion at the terminus of the substrate, meaning that any uniform thickness film-formation is unachievable. This is because with the batch type oil coating film-formation process, the amount of deposition of particles on the substrate changes from site to site. For industrial mass fabrication of artificial opal thin films, this problem has had to be overcome.

### LISTING OF THE PRIOR PUBLICATIONS

Non-Patent Publication 1:
   Dimitrov, A. S.; Nagayama, K. Langmuir 1996, 12, 1303-1311
Non-Patent Publication 2:
   Gu, Z. Z.; Fujishima, A.; Sato, O. Chemistry of Materials 2002, 14, 760-765
Non-Patent Publication 3:
   Jiang, P.; Bertone, J. F.; Hwang, K. S.; Colvin, V. L. Chemistry of Materials 1999, 11, 2132-2140
Non-Patent Publication 4:
   Gates, B.; Xia, Y. N. Advanced Materials 2000, 12, 1329-1332
Non-Patent Publication 5:
   Fudouzi, H. Journal of Colloid and Interface Science 2004, 275, 277-283
Non-Patent Publication 6:
   Fudouzi, H. Colloids and Surfaces a-Physicochemical and Engineering Aspects 2007, 311, 11-15

US 2002/0062782 A1 relates to a method of manufacturing large sphere planar opals by evaporation of a solvent of a solution of monodisperse silica spheres.

It is an object of the present invention to provide an apparatus for fabricating an artificial opal film having a uniform thickness yet a large area, and an artificial opal film fabrication process making use of the same. This object is achieved with the features of the claims.

With the arrangement according to the invention, it is possible to provide continuous fabrication of an artificial opal film having a uniform thickness over a substantially full length of the substrate, and it was possible to fabricate a uniform yet large-area artificial opal film commensurate with substrate size.

According to the second aspect of the invention in particular, the feed of the suspension film to a crystallization zone could be made depending on the crystallization speed governed by environmental conditions so that an artificial opal film having a large area yet the desired uniform thickness could be formed irrespective of environmental conditions.

### BRIEF DESCRIPTION OF THE DRAWINGS

Fig. 1 is illustrative in schematic of the film-formation technique relying upon the convective assembly phenomenon.
Fig. 2 is illustrative in schematic of the film-formation technique relying upon the lift-up deposition method.
Fig. 3 is illustrative in schematic of the film-formation technique relying upon the evaporative deposition method.
Fig. 4 is illustrative in schematic of the film-formation technique relying upon the oil coating method.
Fig. 5 is illustrative of an exemplary batch type film formation.
Fig. 6 is a sectional profile of the thickness of the artificial opal of Fig. 5.
Fig. 7 is illustrative in schematic of the principles of the inventive crystallization apparatus.
Fig. 8 is a longitudinally sectioned view of the apparatus according to Example 1.
Fig. 9 is a view of the apparatus of Example 1 as taken along section A-A.
Fig. 10 is an enlarged, longitudinally sectioned front view illustrative of a scraper portion of Fig. 8.
Fig. 11 is a photograph of the colloidal crystallization state indicative of Experimental Result 1 of Example 2.
Fig. 12 is a photograph of an artificial opal thin film fabricated on a polyvinyl chloride substrate, indicative of Experimental Result 2 in Example 2.
Fig. 13 is illustrative in schematic of the stage feedback control system of Example 1 using spectral information.
Fig. 14 is a photograph of the colloidal crystallization state indicative of Experimental Result 3 of Example 3.
Fig. 15 is a photograph of an artificial opal thin film fabricated on a polyvinyl chloride substrate, indicative of Experimental Result 4 in Example 3.
Fig. 16 is a graph indicative of Experimental Result 5 (thickness profile of the thin film shown in Experimental Results 4) in Example 3.
Fig. 17 is a graph indicative of the reflection spectra of the artificial opal film indicative of Experimental Result 6 in Example 3.
Fig. 18 is illustrative in conception of the apparatus of Example 4.
Fig. 19 is a side view of holder rolls used in the case of using a yarn as the substrate in Example 4.
Fig. 20 is a longitudinally sectioned front view of a scraper used in the case of using a yarn as the substrate in Example 4.
Fig. 21 is illustrative in schematic of how to fabricate a photonic rubber sheet in Example 5.
Fig. 22 is a photograph of a photonic rubber sheet fabricated on a fluororubber sheet, indicative of Experimental Result 7 in Example 5.
Fig. 23 is a photograph of changes in structural colors due to changes in the tensile elasticity of a photonic rubber sheet indicative of Experimental Result 8 in Example 5, and wavelength data indicative of color changes.

### EXPLANATIOS OF THE REFERENCE NUMERALS

(1)(S1): Substrate
(10): Stage
(11)(F24): Oil Bath
(12): Leg
(122): Light Emitter Source
(124): Spectral Analyzer
(13): Internally threaded through-portion
(14): Rail
(15): Pedestal
(16): Step motor
(17): Screw shaft
(18): Gate type frame
(2): Artificial opal thin film crystallization area
(20), (20a), (F22): Scraper (roller)
(21): Probe
(22): Scraper frame
(22a): Bearing
(23): Dovetail engagement structure
(24): Adjustment screw
(2b): Soft opal film
(2c): Color development layer
(3): Fine particle
(31): Spacer base
(32): Evaporation control cover
(3a): Out-of-order state
(3b): Ordered state
(3c): Ordered state in proximity
(6), (S2), (D2f): Suspension
(6a): Uncrystallization area
(6b): Semi-crystallization area
(9), (S3): Coating oil
(F1-2): Crystallization interface
(F1): Uncrystallization area
(F2-3): Solidification interface
(F2): Semi-crystallization area
(F20): Oil coater
(F21): Suspension feed nozzle
(F22D): Die type scraper
(F23): Support roll
(F23a), (F23b): Circular groove roll
(F25): Tank
(F26): Pump
(F27): Drain
(F3): Crystallization area
(F30): Heater for dispersion medium evaporation
(F40): Particle fixation device
(F41): Binder resin feed nozzle
(F50): Second heater
(R1): Substrate roll
(R2): Complete roll
(S1F): Continuous substrate
(S1f): Yarn substrate
(T): Film thickness
(V1): Crystal growth speed
(V2): Substrate movement speed
(r10) to (r17): Guide roll

### BEST MODE FOR CARRYING OUT THE INVENTION

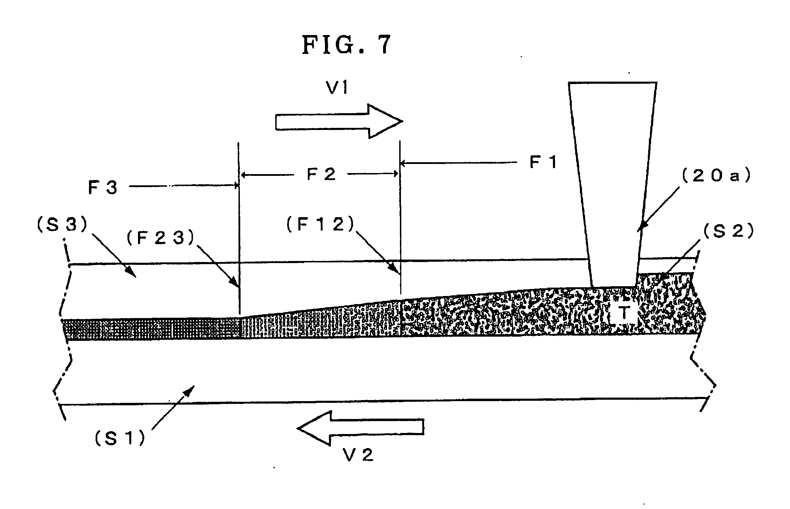

Fig. 7 is illustrative in schematic of the principles of the inventive crystallization apparatus. For a substrate (S1), hydrophilic glass plasma cleaned on its surface is used. In Fig. 7, (20a) stands for a scraper to control the liquid thickness (T) of a suspension (S2) placed on the substrate (S1). As the substrate (S1) moves left on the drawing sheet at a speed (V2), the suspension moves left too while it is controlled by the scraper (20a) to the thickness (T). The suspension is covered with coating oil (S3). The dispersion medium of the suspension (S2) is evaporated off through the oil coating layer. With the evaporation of the dispersion medium, the concentration of fine particles in the suspension grows high, and at a crystal growth speed (V1) determined by the speed of evaporation of the dispersion medium in the suspension (S2) and the film thickness, crystallization keeps on going right on the drawing sheet.

When both speeds are equal: V1 = V2, a crystallization interface (F1-2) and a solidification interface (F2-3) defining the boundaries of a uncrystallization area (F1), a semi-crystallization area (F2) and a crystallization area (F3), respectively, are going to appear at a distance of given length from the scraper (20a). In other words, the above principles show that if V1 = V2 is maintained, it is then possible for the suspension (S2) at the uncrystallization area (F1) to create the semi-crystallization area (F2) continuously. In turn, this semi-crystallization area changes into the crystallization area (F3) to form an artificial opal thin film (2) having a uniform thickness.

### Example 1

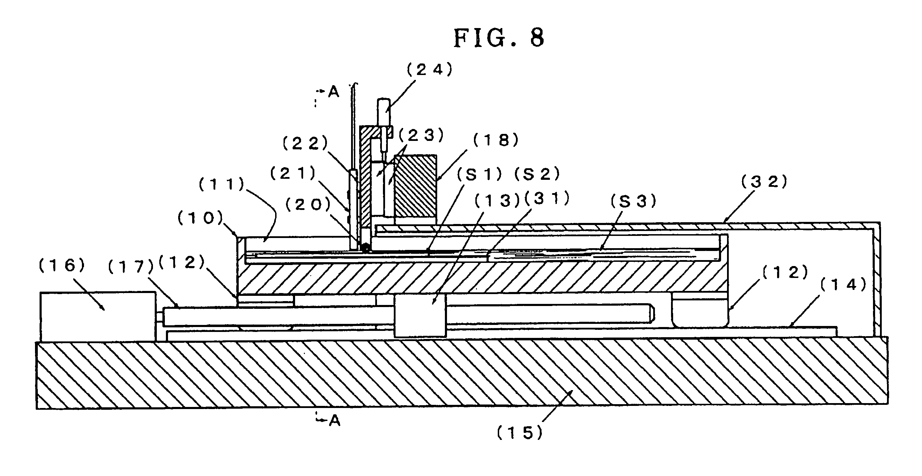

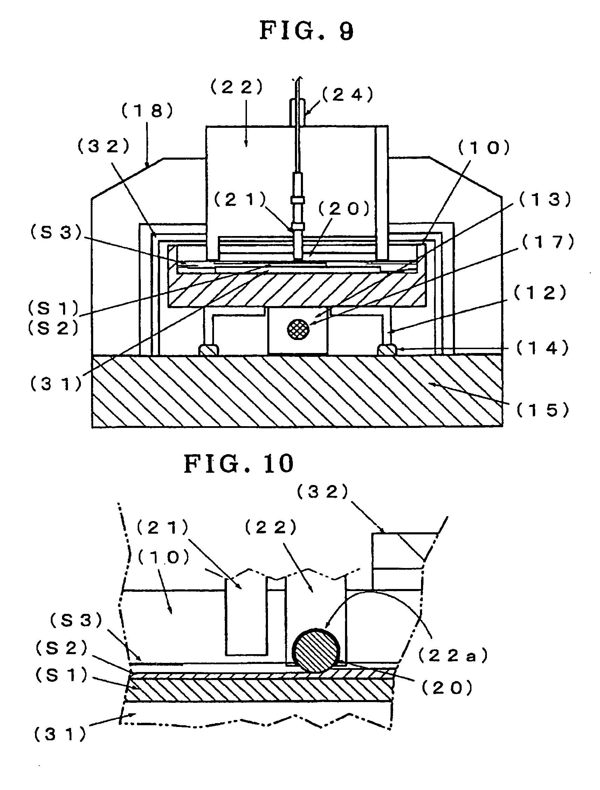

One exemplary apparatus of the invention is now explained with reference to Figs. 8, 9 and 10, and with the top surfaces of the rails (14), (14) located as horizontals.

The rails (14), (14), a step motor (16) and the gate type frame (18) are all fixed on the upper surface of a pedestal (15) placed on a stable ground.

A stage indicated at (10) has at its upper portion an oil bath (11) having a horizontal bottom, and legs (12), (12) fixed at its bottom surface are slidably supported on the upper surfaces of the rails (14), (14).

The stage (10) is fixedly provided at its bottom surface with an internally threaded through-portion (13) that has a horizontal axis and is in threaded engagement with a screw shaft (17) rotationally driven by the step motor (16).

Thus, the stage (10) is moved back and forth in the horizontal direction by the rotation of the step motor (16).

The gate type frame (18) positioned across and ever the stage (10) is provided with a scraper adjustment structure comprising the following structure. There is a dovetail groove engagement structure (23) that is relatively movable in the vertical direction, and one member thereof is fixed to the frame (18) while the other is fixedly provided with a scraper frame (22) having a rolled scraper (20) held at its lower end.

The dovetail groove engagement structure (23) is provided with an adjustment screw (24) that is held at one of both members forming the structure (23) and engaged at its lower end with the other, so that as the adjustment screw moves vertically, it causes the scraper frame (22) to move vertically with respect to the pedestal (15) whereby the vertical position of the scraper (20) can be set.

The scraper (20) is held at both ends horizontally at the lower end of the scraper frame (22) via a bearing (22a), and has its axis at right angles with the axis of the screw shaft (17).

A transparent resin cover indicated at (32) is an evaporation control cover that covers the whole of the stage (10) positioned below the gate type frame (18) and on a side thereof where there is none of the scraper (20) provided.

This cover (32) keeps the evaporation of the dispersion medium of the suspension (S2) in check before it passes the scraper (20), so that there is the uncrystallization state maintained.

Thus, the suspension (S2) formed on the sheet-form substrate (S1) placed within the oil bath (11) and at the bottom surface is moved from right to left on the drawing sheet while covered with oil (S3), and the thickness of the suspension (S2) is adjusted by the scraper (20), after which the opal film is going to be formed in an area on the left side of the scraper (20).

A spacer support base indicated at (31) is provided to maintain the horizontality of the substrate (S1) in the oil bath (11).

A probe indicated at (21) is provided to sense the semi-crystallization state of the suspension (S2) after thickness adjustment by the scraper (20).

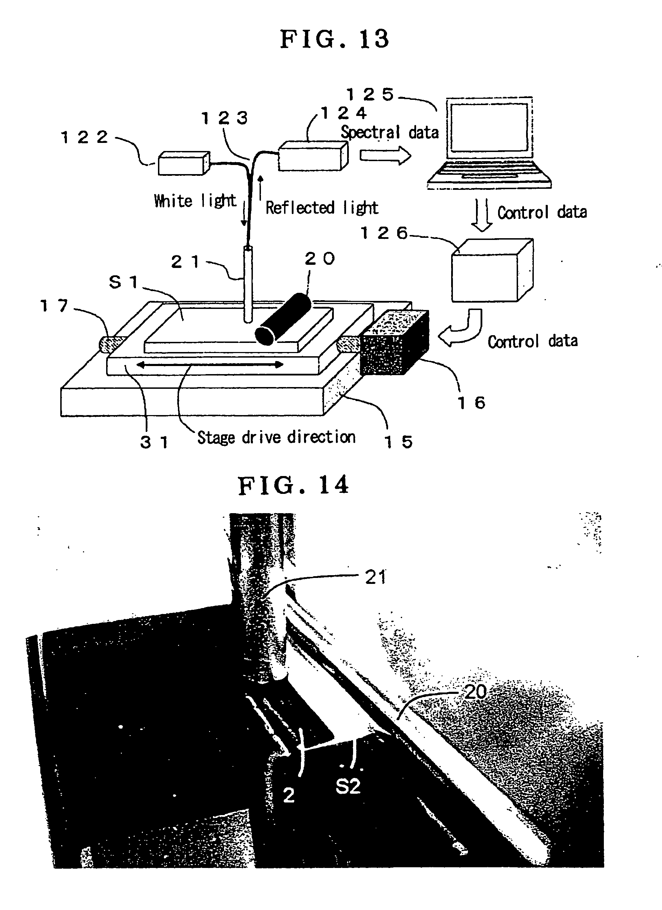

The automatic control system for the stage (10) is now explained with reference to Fig. 13.

The control principles here harness the crystallization of fine particles in Fig. 7 whereby a specific wavelength of incident light is selectively reflected according to the Bragg diffraction. Crystallization is measured by monitoring the light intensity of that specific wavelength. More specifically, a fiber type spectral analyzer (124) is used to monitor the intensity of the specific wavelength. As the monitored intensity exceeds the preset threshold, it causes the stage (10) to move until it runs short of the preset threshold. This oil coating feedback control makes continuous fabrication of opal thin films feasible.

The probe (21) is provided with a sensor that receives reflected light of white light given out of an emitter source (122) downward, and that reflected light is analyzed by the spectral analyzer (124) to send frequency analysis data of the reflected light out to a control program.

Thus, wavelength changes of the reflected light occurring upon changing of the suspension (S2) below the probe (21) from the uncrsytallization state to the semi-crystallization state are recognized by the control program. As the suspension is found by the control program to be in the semi-crystallization state, it causes control data running at a given speed to be sent to a controller for the step motor (16). It in turn causes the step motor (16) to be rotated and driven until the suspension (S2) in the semi-crystallization state is fed to below the probe (21).

As the suspension (S2) in the uncrystallization state reaches below the probe (21), it is sensed so that a signal instructing the stop of the motor (16) is sent as the control data to the controller for the motor.

Thus, the step motor (16) is intermittently driven and stopped as desired so that the suspension (S2) at the surface of the substrate (S1) can sequentially be turned into opal.

It is here to be noted that the average moving speed of the stage may be determined on the obtained drive/stop information and time information about it.

This average moving speed may be taken as the opal formation speed for that system.

A specific fabrication process using the apparatus as described above is now explained. A structure, wherein a substrate (S1) made hydrophilic at its surface is covered with a suspension (S2) and the suspension is covered with a coating oil (S3) having a specific gravity lower than that of the suspension (S2), is set in an oil bath. As shown in Fig. 7, the evaporation of the dispersion medium from the suspension (S2) takes place in dispersion medium evaporation areas (F1), (F2) and (F3) through an oil coating layer (13). The substrate is covered on the opposite side with a transparent resin cover in such a way that the evaporation of the dispersion medium occurs only in the direction of movement of the substrate. As the substrate or the scraper moves, it brings about the phenomenon of Fig. 7 whereby the artificial opal (2) is formed.

In manual operation, changes in the position of the solidification interface (F2-3) are observed under a microscope to measure the crystal growth speed (V1).

When the inventive apparatus is used under stable environmental conditions, for instance, in a constant temperature chamber, whether or not V1 prevails under those environmental conditions is first checked. Then, the substrate is continuously moved at a constant speed such that V1 = V2 so that the artificial opal film can be formed in a continuous fashion.

### EXAMPLE 2

In the example here, how to form an artificial opal film using the oil coating, constant speed control incorporating Example 1 is exemplified, and the obtained artificial opal film is explained.

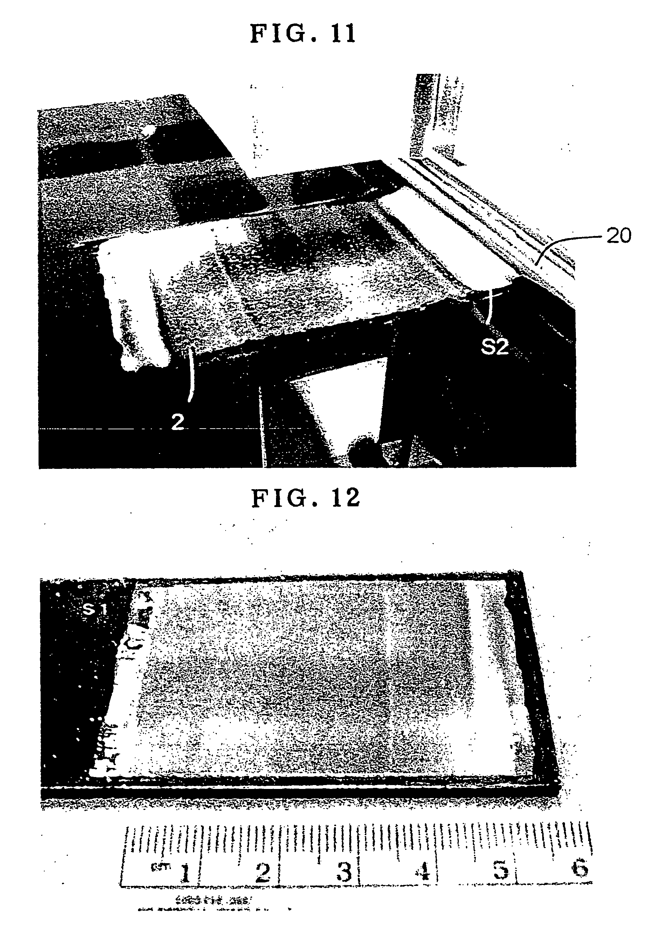

Experimental Result 1 shown in Fig. 11 is a snapshot of the crystallization process implemented under the oil coating, constant speed control. In this experimentation, polystyrene monodisperse particles made by Polyscience, Inc. (having a particle diameter of 202 nm and a CV value of < 8%) were used. The polystyrene monodisperse particles are dispersed in water, taking the form of a milk white suspension. The stage (10) has been moving in the left direction; on the left side there is an area where an artificial opal thin film is formed, emitting a green structural color, and near a roller on the right side there is a milk white suspension or uncrystallization area. For the substrate (S1), a black polyvinyl chloride sheet (100 mm × 40 mm × 2 mm) was used. Using a hydrophilic treatment device (plasma treatment by back sputtering; Vacuum Device Co., Ltd.), the substrate was treated on its surface for 3 minutes to allow the substrate to be wetted by the suspension (S2). With a gap of 200 µm set between the surface of the substrate (S1) and a roller (20), 2.5 ml of the suspension were coated all over the substrate. To ready for experimentation, the suspension was coated on its surface with silicon oil (Shin-Etsu Chemical Co., Ltd., 10 cSt). The roller (20) was moved to the left end of the substrate, after which the stage (10) was moved left at a constant speed of 18 µm/min. to implement film-formation operation. Thereafter, excessive silicon oil (S3) was removed off, and a polydimethyl silicone (PDMS) elastomer was poured among the particles to fix the crystallized PS particles to the substrate. For the PDMS, Sylgard 184 made by Dow Corning Co., Ltd. was used. Consequently, there was a composite material thin film formed, in which the PDMS elastomer was filled up in the gap having the PS particles ordered in it. In Experimental Result 2 shown in Fig. 12, a uniform yet high-quality artificial opal thin film is formed in a 50 mm × 35 mm area.

### EXAMPLE 3

Over the oil coating, constant speed control having the need of finding the condition for V1 = V2 by preliminary experimentation, the feedback control has the merit of being much more simplified in film-formation operation, because it works in such a way as to optimize the condition for V1 = V2 automatically as a whole.

Experimental Result 3 shown in Fig. 14 is a snapshot of the crystallization process under the oil coating feedback control. In the example here, polystyrene monodisperse particles made by Polyscience, Inc. (having a particle diameter of 202 nm and a CV value of < 8%) were used. The polystyrene monodisperse particles are dispersed in water, taking the form of a milk white suspension. The stage (10) has been moving left under feedback control based on the measurement data of spectral analysis. On the left side, there is an area where there is an artificial opal thin film (2) formed, giving out a green structural color, and near a roller (20) on the right side, there is an uncrystallization area (F1) where there is a milk white suspension. For a substrate (S1) a black polyvinyl chloride sheet (100 mm × 40 mm × 2 mm) was used. The substrate was treated on its surface for 3 minutes with a hydrophilic treatment device (plasma treatment by back sputtering; made by Vacuum Device Co., Ltd.) in such a way as to be wetted by the suspension (S2). With a gap of 200 µm set between the surface of the substrate (S1) and the roller (20), 1.5 ml of the suspension were coated all over the substrate. To ready for experimentation, the suspension (S2) was coated on its surface with silicone oil (Shin-Etsu Chemical Co., Ltd.; 10 cSt) (S3). A cylinder at the center of the snapshot) is a fiber probe (21) connected to a spectral analyzer (made by Ocean Optics Co., Ltd.) capable of measuring substantially regularly reflected spectra. As was the case with the oil coating, constant speed control, the roller (20) was moved at the left end of the substrate (S1), after which the stage (10) was moved under feedback control. This film-formation operation was set such that as the preset wavelength intensity of 545 nm was found by monitoring to be exceeded, it caused the stage to move in the left direction at a speed of 72 µm/min. As the substrate (S1) moves, the wavelength intensity gets low too, and as the preset value is not reached, it causes the substrate to stop automatically. The feedback control based on spectral data was implemented in such a way as to satisfy the condition for V1 = V2.

Then, after removal of the silicon oil (S3), a polydimethyl silicone (PDMS) elastomer was poured among the particles to fix the crystallized PS particles to the substrate. For the PDMS, Sylgard 184 made by Dow Corning Co., Ltd. was used. Consequently, there was a composite material thin film formed, in which the PDMS elastomer was filled up in the gap having the PS particles ordered in it.

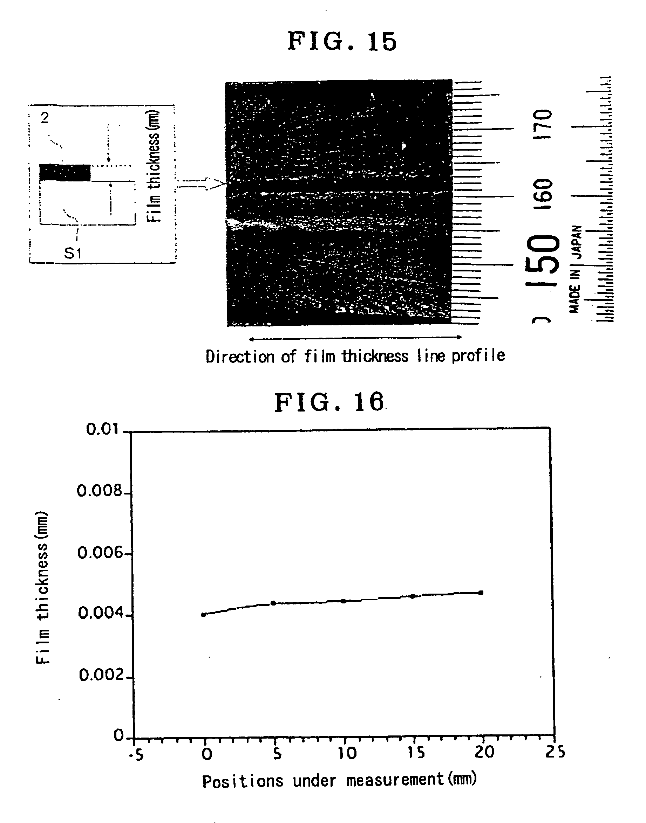

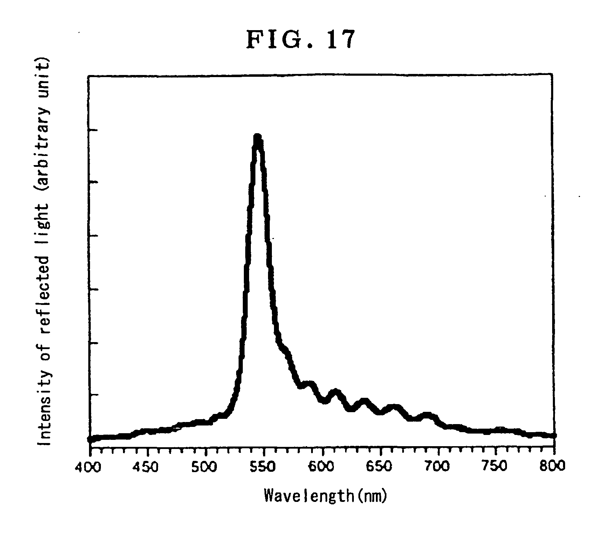

A belt-form portion of the thin film near the center was removed for the purpose of measuring the thickness of the thin film of Fig 15 (Experimental Result 4) obtained in the example here, and its surface profile was measured in a double-action arrow direction with a surface roughness meter (Tokyo-Seimitsu Co.). The results (Experimental Result 5) are plotted in Fig. 16 with the abscissa indicative of positions in the horizontal direction and the ordinate indicative of the thickness of the thin film measured in terms of surface profile. All over a length of 20 mm, a film thickness of almost uniformly 4.4 µm is maintained with little variations. For the purpose of checking up the crystallinity of the fabricated artificial opal thin film (2), reflection spectra are shown in Fig. 17. At 545 nm there is a sharp reflection peak observed. As was the case with the oil coating, constant speed control of Fig. 12, it was possible to fabricate a high-quality artificial opal thin film giving out a green structural color.

### EXAMPLE 4

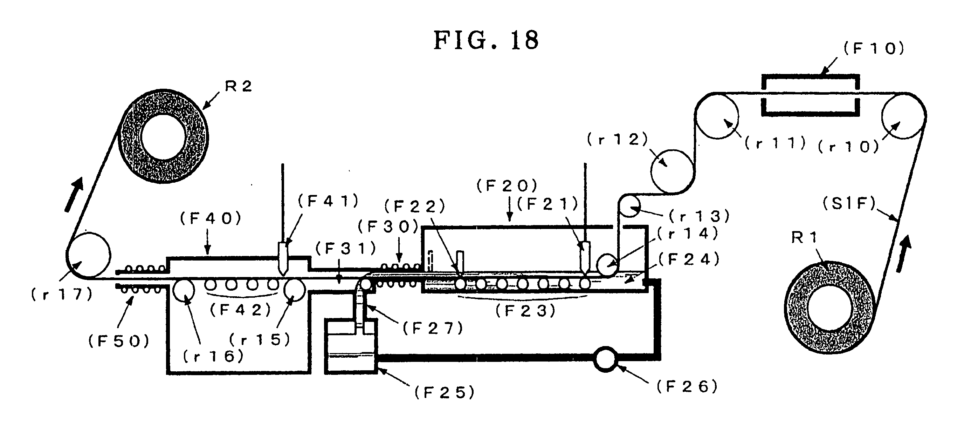

The apparatus capable of continuously fabricating an opal film on a continuous substrate is exemplified in the example here (see Figs. 18, 19 and 20).

As a complete roll (R2) with an opal film coated on the surface of a substrate is fabricated out of a substrate roll (R1) that is a film form of continuous substrate (S1F), the substrate moves a certain path from (R1) toward (R2) while guided by guide rolls (r10 to r17)

Of the guide rolls, (r12) and (r17) are mutually speed controlled in such a way as to provide the same peripheral speed, and the feed speed of the substrate (S1F) is controlled by the rotation speed of both rolls.

Other guide rolls (r10-r11 and r13-r16) work as tension rolls that keep on maintaining a constant tension on the substrate (S1F).

Such an apparatus as mentioned below is installed on the way along the thus constructed substrate delivery system.

Between the guide rolls (r10) and (r11), there is an ultraviolet irradiator (F10) positioned to apply hydrophilic treatment to the surface of the continuous substrate (S1F).

Between the guide rolls (r12) and (r17), the substrate makes its way from an oil coater (F20) to a heater (F30) to the evaporation of a dispersion medium and a particle-fixation device (F40), all located in series within a chamber.

The oil coater (F20) has an oil bath (F24) at its lower portion, and there is a suspension feed nozzle (F21) provided upstream thereof, and a scraper (F22) provided downstream thereof.

This section should be highly sealed up to inhibit the dispersion medium of the suspension from evaporation.

Thus, the suspension is coated on the surface of the substrate, and the coating thickness is adjusted by the scraper (F22).

Although height control of that scraper (F22) is not illustrated, height can be set from outside the chamber by any well-known drive means.

The substrate thus coated with the suspension enters the heater (F30) where the dispersion medium is evaporated off by heating to place fine particles in a crystallization state.

At the terminus of the heater (F30), there is a drain (F27) provided for removal of oil out of the system involved.

This drain (F27) removes oil from around the substrate, and the displaced oil is once stored in a tank (F25), from which it is again fed into the oil bath (F24) by means of a pump (F26).

And the discharge of the pump (F26) is adjusted to keep the level of oil in the oil bath (F24) constant.

The substrate with the crystallized fine particles having on its surface enters the particle-fixation device (F40) that is provided with a binder resin feed nozzle (F41) having at its outlet a second heater (F50) for accelerating the solidification of the binder resin.

Thus, a complete product having an artificial opal film formed on the surface of the substrate is going to be wound around R2.

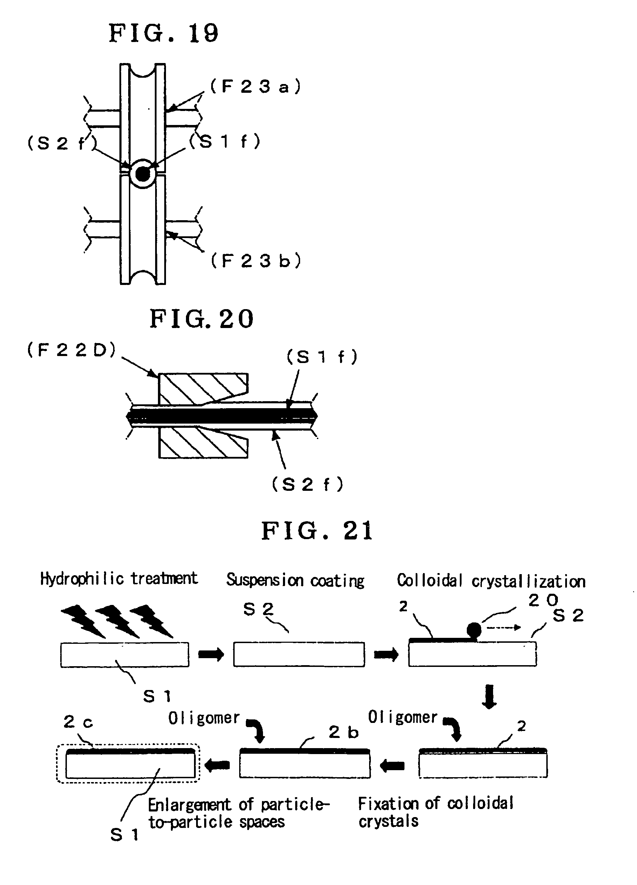

The continuous film formation may be applied not just to a two-dimensional sheet but also to a one-dimensional thread or yarn. The jigs needed for coating an artificial opal film on the surface of a yarn are now explained with reference to Figs. 19 and 20.

In order for the apparatus of Fig. 18 to be used to coat the suspension all around a yarn substrate (S1f), round groove rolls (F23a), (F23b) shown in Fig. 19 are used instead of the support roll (F23).

The groove rolls (F23a), (F23b) are each provided on the periphery with a semicircular groove where the yarn substrate (S1F) is sandwiched between circular spaces from above and below, and installed such that it is freely rotatable around an axis of rotation.

By doing that, a suspension (D2f) fed from the nozzle (F21) is spreading all over the periphery of the substrate as the substrate moves.

A die type scraper (F22D) shown in Fig. 20 was used instead of the scraper (F22).

Thus, the suspension (D2f) is allowed to spread all around the substrate at a substantially uniform thickness.

The structure involved is otherwise the same as the structure of Fig. 18; however, it is preferable that the respective guide rolls are configured as such groove rolls as depicted in Fig. 19 in consideration of contact with the substrate.

### EXAMPLE 5

How to fabricate a photonic rubber sheet (JP(A) 2006-28202: an elastomer material having a periodic structure changing in structural color depending on tensile stress and its fabrication process) is now exemplified.

For a rubber sheet for elastic deformation, a flurorubbber sheet (FTB 8010 made by Tigers Polymer Co., Ltd.: 0.5 mm in film thickness) was used a substrate (S1). It is here to be noted that this example may also be applied to fluorosilicon rubber sheets, and urethane rubber sheets.

The fabrication process is shown in Fig. 21. First, the rubber sheet (S1) is washed on its surface for removal of depositions such as oil. Then, hydrophilic functional groups are formed by plasma treatment, ultraviolet irradiation or the like to render the surface of the substrate hydrophilic. The rubber sheet (S1) is placed at a given position in the film-formation apparatus referred to in Example 1, and the necessary suspension (S2) is added dropwise to the upper surface of the rubber sheet for wetting all over the surface. In the example here, polystyrene monodisperse particles made by Polyscience, Inc. (having a particle diameter of 202 nm and a CV value of < 8%) were used. The polystyrene monodisperse particles are dispersed in water, taking the form of a milk white suspension.

In this state, colloidal crystallization was implemented under the oil coating, constant speed control. After colloidal crystals were formed by the scraper (20), silicon oil was removed. For the fixation of colloidal crystals, a polydimethyl silicone (PDMS) oligomer was poured among particles. For the PDMS, Sylgard 184 made by Dow Corning Co., Ltd. was used. Consequently, the cross-linked silicon oligomer comes to have PS particles ordered in it, yielding a composite material with the PDMS elastomer filled up in a gap, that is, a soft opal film (2b). Further there was operation repeated, wherein the swelling of the soft opal and the fixation of the PDMS elastomer were repeated to enlarge particle-to-particle spaces. Thus, there could be a photonic rubber sheet formed having a color-developing layer (2c) on the rubber sheet proper (S1).

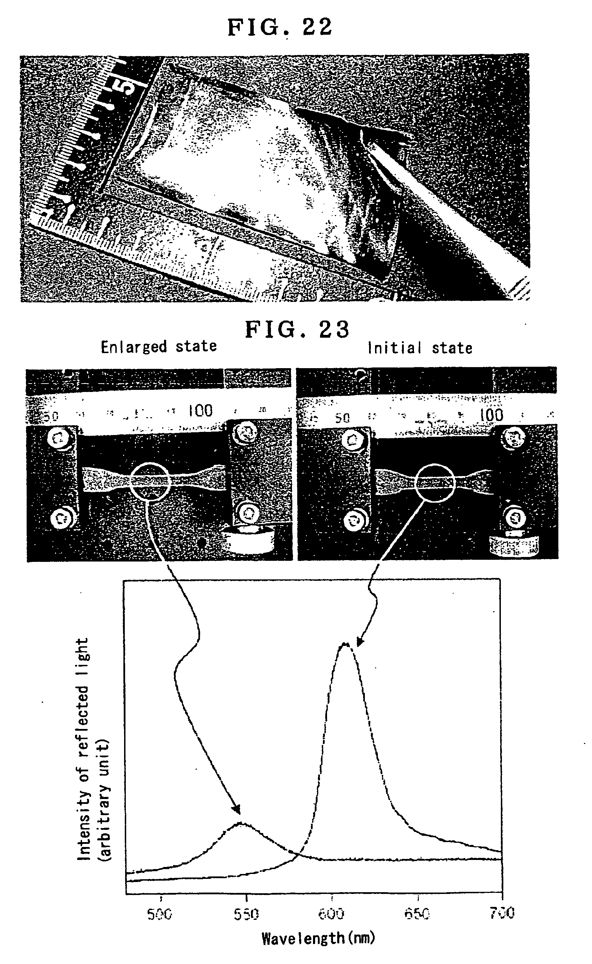

A photonic rubber sheet having a red color-developing layer in an area of 80 mm × 35 mm (Experimental Result 7) is shown in Fig. 22. While the right-upper portion is pulled up by tweezers, a green structural color is observed at a bend. The sheet was punched out by a dumbbell-shaped mold (No. 7 for JISK 6251) to prepare a testing piece for tensile deformation. From Experimental Result 8 shown in Fig. 23, it has been ascertained that the structural color changes reversibly as the testing piece is stretched. In the right-upper initial state, the whole testing piece was in red with a Bragg diffraction peak around 600 nm. This was stretched 20% by a micro-stage. In the stretched area of the photonic rubber sheet, the structural color turned from red to green. Diffraction peaks of spectra, too, shifted toward a low wavelength side until 500 nm or less, and the reflection intensity became low as well, providing a broad peak. As the tensile stress was taken out to allow the photonic rubber sheet to go back to the original state, the structural color again went back to the initial red too. In the example here, it is shown that there can be a photonic rubber sheet fabricated with the structural color changing repeatedly by elastic deformation.

### INUSTRIAL APPLICABILITY

With the inventive apparatus and process for fabricating artificial opal thin films, it is possible to provide an artificial opal film having a uniform thickness yet a large area, and it is possible to use this artificial opal film as a starting material for high-performance materials and devices having photonic crystals and photonic structural colors.

## Claims

1. An artificial opal film fabrication apparatus comprising:
a scraper (20) adapted to adjust a thickness of a suspension film (S2),
a stage (10) that is movable relative thereto in a constant horizontal direction, wherein the stage is adapted to locate a substrate coated with the suspension film (S2) having fine particles dispersed in it, wherein a dispersion medium of said suspension film (S2) is evaporatable off thereby crystallizing said fine particles to fabricate an artificial opal film, wherein the stage is adapted to position the substrate attached to that stage (10) such that when said stage moves horizontally, the scraper is adapted to control the thickness of the suspension film coated on that substrate in an uncrystallization state, and
an evaporation control cover (32) adapted to control the evaporation of the dispersive medium of said suspension film before it passes said scraper (20).

2. The artificial opal film fabrication apparatus according to claim 1, further comprising:
a sensor means that is provided on a scraper side to sense whether the suspension film whose thickness has been adjusted by said scraper (20) changes from an uncrystallization state over to a semi-crystallization state,
a control means adapted to set off horizontal movement of said stage in response to sensing of the semi-crystallization state by said sensor means and to stop the horizontal movement of said stage in response to sensing of the uncrystallization state by said sensor means.

3. The artificial opal film fabrication apparatus according to claim 1, **characterized by** further comprising a feeder means to provide a continuous feed of a continuous substrate (1) into the stage (10), a means to feed a suspension to said continuous substrate to form a suspension film on it, and a means to provide a continuous discharge of the substrate (1) having an artificial opal film formed on it out of said stage (10)..

4. An artificial opal fabrication process that makes use of the artificial opal film fabrication apparatus according to any one of claims 1 to 3, wherein a rubber material is used as said substrate (1) so that an artificial opal film made of said particles is formed on a surface of the rubber material.

## Patentansprüche

1. Vorrichtung zur Herstellung eines künstlichen matten Films, die aufweist:
einen Abstreifer (20), der eingerichtet ist, eine Dicke eines Suspensionsfilms (S2) einzustellen,
einen Objekttisch (10), der relativ dazu in eine konstante horizontale Richtung bewegbar ist, wobei der Objekttisch eingerichtet ist, ein Substrat anzuordnen, das mit dem Suspensionsfilm (S2) beschichtet ist, in dem feine Teilchen dispergiert sind, wobei ein Dispersionsmedium des Suspensionsfilms (S2) verdampfbar ist, wodurch die feinen Teilchen kristallisiert werden, um einen künstlichen matten Film herzustellen, wobei der Objekttisch eingerichtet ist, das auf dem Objekttisch (10) befestigte Substrat so zu positionieren, dass wenn sich der Objekttisch horizontal bewegt, der Abstreifer eingerichtet ist, die Dicke des Suspensionsfilms, mit dem das Substrat beschichtet ist, in einem nicht kristallisierten Zustand zu steuern, und
eine Verdampfungsteuerungsabdeckung (32), die eingerichtet ist, die Verdampfung des dispergierenden Mediums des Suspensionsfilms zu steuern, bevor es den Abstreifer (20) passiert.

2. Vorrichtung zur Herstellung eines künstlichen matten Films nach Anspruch 1, die ferner aufweist:
ein Sensormittel, das auf einer Seite des Abstreifers vorgesehen ist, um abzutasten, ob der Suspensionsfilm, dessen Dicke durch den Abstreifer (20) eingestellt worden ist, von einem nicht kristallisierten Zustand zu einem halbkristallisierten Zustand übergeht,
ein Steuermittel, das eingerichtet ist, die Horizontalbewegung des Objekttischs als Reaktion auf das Abtasten des halbkristallisierten Zustands durch das Sensormittel abzuschalten und die Horizontalbewegung des Objekttischs als Reaktion auf das Abtasten des nicht kristallisierten Zustands durch das Sensormittel zu stoppen.

3. Vorrichtung zur Herstellung eines künstlichen matten Films nach Anspruch 1, **gekennzeichnet durch** ein Zuführungsmittel zur kontinuierlichen Zufuhr eines zusammenhängenden Substrats (1) in den Objekttisch (10), ein Mittel zur Zufuhr einer Suspension zu dem zusammenhängenden Substrat, um einen Suspensionsfilm darauf zu bilden, und ein Mittel zur kontinuierlichen Abgabe des Substrats (1) mit einem darauf ausgebildeten künstlichen matten Film vom Objekttisch (10).

4. Verfahren zur Herstellung eines künstlichen matten Films, das von der Vorrichtung zur Herstellung eines künstlichen matten Films nach einem der Ansprüche 1 bis 3 Gebrauch macht, wobei ein Gummimaterial als das Substrat (1) verwendet wird, so dass ein künstlicher matter Film, der aus den Teilchen besteht, auf einer Oberfläche des Gummimaterials gebildet wird.

## Revendications

1. Dispositif pour la production d'une membrane d'opale artificielle, comprenant :
un racleur (20) prévu pour ajuster l'épaisseur d'une membrane en suspension (S2),
une platine (10) mobile par rapport à celui-ci dans une direction horizontale constante, la platine étant prévue pour qu'y soit disposé un substrat revêtu de la membrane en suspension (S2) à particules fines dispersées, un milieu de dispersion de la membrane en suspension (S2) étant évaporable en cristallisant les particules fines pour produire une membrane d'opale artificielle, la platine étant prévue pour positionner le substrat fixé à la platine (10) de telle manière que lorsque la platine se déplace horizontalement, le racleur est apte à régler l'épaisseur de la membrane en suspension dont le substrat est revêtu dans un état de non-cristallisation, et
un couvercle de commande d'évaporation (32) prévu pour commander l'évaporation du milieu de dispersion de la membrane en suspension avant de passer à travers le racleur (20).

2. Dispositif pour la production d'une membrane d'opale artificielle selon la revendication 1, comprenant en outre :
un moyen de détection prévu sur un côté du racleur pour détecter si la membrane en suspension dont l'épaisseur a été ajustée par le racleur (20) passe d'un état de non-cristallisation à un état de semi-cristallisation,
un moyen de commande prévu pour lancer le déplacement horizontal de la platine en réaction à la détection de l'état de semi-cristallisation par le moyen de détection, et pour arrêter le déplacement horizontal de la platine en réaction à la détection de l'état de non-cristallisation par le moyen de détection.

3. Dispositif pour la production d'une membrane d'opale artificielle selon la revendication 1, **caractérisé en ce qu'**il comprend en outre un moyen d'amenée pour réaliser une amenée continue d'un substrat continu (1) vers la platine (10), un moyen d'amenée d'une suspension au substrat continu pour former une membrane en suspension sur celui-ci, et un moyen d'évacuation continue du substrat (1) sur lequel une membrane d'opale artificielle a été formée hors de la platine (10).

4. Procédé de production d'une membrane d'opale artificielle recourant au dispositif pour la production d'une membrane d'opale artificielle selon l'une des revendications 1 à 3, où un caoutchouc est utilisé en tant que substrat (1) de manière à former une membrane d'opale artificielle constituée de particules sur une surface du caoutchouc.
